(19) Europäisches Patentamt
European Patent Office
Office européen des brevets

(11) **EP 4 734 010 A1**

(12) **EUROPEAN PATENT APPLICATION**

(43) Date of publication:
**29.04.2026 Bulletin 2026/18**

(21) Application number: 24306771.7

(22) Date of filing: **22.10.2024**

(51) International Patent Classification (IPC):
***G06N 10/40*** *(2022.01)* ***G06N 10/70*** *(2022.01)*

(52) Cooperative Patent Classification (CPC):
**G06N 10/40; G06N 10/70;** G06N 10/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Alice & Bob
75015 Paris (FR)**

(72) Inventors:
• **COTTET, Nathanaël
75015 PARIS (FR)**

• **DEVULDER, Adam
75015 PARIS (FR)**
• **VILLE, Jean-Loup
75015 PARIS (FR)**
• **JEZOUIN, Sébastien
75015 PARIS (FR)**

(74) Representative: **Atout PI Laplace
Immeuble Up On
25 Boulevard Romain Rolland
CS 40072
75685 Paris Cedex 14 (FR)**

(54) **METHOD AND SYSTEM FOR CHARACTERIZATION OF A QUANTUM DEVICE**

(57) A method of characterizing a quantum device, comprising a step of observing by quantum tomography (84) evolutions of an oscillator of the quantum device initially prepared (80) with at least one coherent state and being subsequently subjected (82) to a dynamical interaction, and a subsequent step of using tomographies obtained during the step of observing to characterize a non-linear effect experienced by the oscillator upon performance of the dynamical interaction.

Fig. 8

EP 4 734 010 A1

**Description**

**Technical context**

The invention lies in the field of quantum computing and concerns a method and a system for characterizing a quantum device, and it can be used more specifically in systems and methods for performing a CNOT gate between two qubits, named target qubit and control qubit, in particular wherein at least the target qubit is a cat qubit, named target cat qubit, and preferably between two cat qubits, named target cat qubit and control cat qubit. The invention may be further used in particular when calibrating such a CNOT gate involving a target cat qubit and preferably between cat qubits to minimize errors arising from deformation of the target cat qubit during performing of the gate.

Quantum computing, device

A quantum computing device or quantum computer, or more generally any quantum device, exploits quantum mechanical phenomena using specialized hardware. Quantum computers can perform some calculations much faster than non-quantum computers. Their basic unit of information are qubit, for quantum bit, that can exist in a superposition of states. Physical qubits suffer from quantum decoherence, introducing noise, but implementations exist in particular with superconductor components.

Bosonic codes or Continuous-Variable codes, using oscillators, are known methods of encoding information in quantum devices. They include, among others, codes embodied in qubits having cat states and codes embodied in qubits having states known either as comb, grid or GKP states. The invention is described in relation to cat qubits, but may find applications with other types of qubits.

Quantum gates

Quantum gates are fundamental logical bricks which are essential to realizing a quantum computing device. They typically involve one or more qubits. Some quantum gates involve two qubits - a control qubit, the state of which is not affected by the gate and a target qubit which state is modified by the gate depending on the state of the control qubit.

To extract the joint information of several data qubits, conventional quantum circuits perform a sequence of two-qubit gates (typically CNOT gates also called CX gates) between an ancilla qubit, acting as the control qubit, and several data qubits, each acting as the target qubit. Then the circuit measures the state of the ancilla qubit. When this operation is used to detect quantum errors, it is included in a syndrome extraction round (SER). The realization of these quantum gates is thus key in detecting errors and performing quantum error correction codes (QECC). Furthermore, the implementation of a CNOT gate such that a very low amount of errors is induced is needed to the successful realization of a QECC. Implementations of these gates require performing dynamical interactions between qubits and these interactions have parameters, in particular intensity (i.e. interaction strength) and/or phase of various interaction terms arising through the dynamical interaction.

Cat qubits

Qubits can be encoded in states of harmonic oscillators in bosonic modes. In particular, cat qubits known through several publications, among them the article Lescanne et al. "Exponential suppression of bit-flips in a qubit encoded in an oscillator", Nature Physics 16, 509-513, 2020, are a promising platform for realizing practical Fault Tolerant Quantum Computing (FTQC). Their built-in exponential suppression of bit-flips (referred to as stabilization) allows for a 1D repetition code (or other classical codes such as LDPC code - low-density parity-check- comprising stabilizers of weight greater than 2 and local connectivity) correcting only the remaining phase flip errors, drastically reducing the overhead needed to reach useful QECC compared to standard approaches based on surface codes correcting for both bit and phase flip errors.

A cat qubit is defined as a two-dimensional manifold spanned by so-called cat states $|C_\alpha^\pm\rangle$ which are specific superpositions of two coherent states $|\alpha\rangle$ and $|-\alpha\rangle$, namely $|C_\alpha^\pm\rangle = N^\pm (|\alpha\rangle \pm |-\alpha\rangle)$ with

$$N^\pm = 1/\sqrt{2\left(1 \pm e^{-2|\alpha|^2}\right)}.$$

Cat qubits can be stabilized with a non-linear conversion between two photons of a first mode a - the memory mode or cat qubit mode - and one photon of a second mode b - the buffer mode.

Cat qubits are known to benefit, because of the stabilization, from a high noise bias, the bit-flip probability being exponentially smaller than the phase-flip probability. More precisely, an effective error channel (e.g., bit errors or "bit-flips") is suppressed in an exponential way when the "size"- i.e. the average number of photons $\bar{n} = |\alpha|^2$ - of the Schrödinger

cat states of the cat qubits - increases. And this exponential suppression of bit-flips is only at the cost of linear increase of phase-flips.

The above-mentioned non-limiting example stabilization scheme stabilizes a cat qubit using a parametric dissipative stabilization, with jump operator (a.k.a Lindblad operator) $L_2 = \sqrt{\kappa_2}(a^2 - \alpha^2)$, where $\kappa_2$ is the two-photon dissipation rate, a is the photon annihilation operator of the memory mode a and $\alpha$ is a complex number defining the cat qubit. This jump operator can be realized by coupling a lossy buffer mode b with dissipation rate $\kappa_b$, and a four-wave mixing device - typically a Josephson junction or a so-called Asymmetrically Threaded SQUID (ATS, SQUID standing for Superconducting Quantum Interference Device, the ATS being disclosed in Lescanne et al. Nature Physics 16, 509-513, 2020) - to the cat qubit mode a and by engineering the Hamiltonian $\frac{H}{\hbar} = g_2(a^2 - \alpha^2)b^\dagger$, where b is the photon annihilation operator of the buffer mode b and $g_2$ is the two-photon coupling rate, by applying to the four-wave mixing device a pump at frequency $|2f_a - f_b|$ and a drive of the buffer mode b at frequency $f_b$ provided $g_2 < \kappa_b$.

Lescanne *et al.* 2020 teaches that the stabilization is conveniently induced using the ATS. The ATS has two loops and three ports and mediates a two-photon exchange interaction dependent on the magnetic fluxes threading the two loops, which are formed with two DC biases, and one or several RF components. The device operates at a first order flux insensitive point called saddle point where the buffer frequency depends only weakly on one of the DC flux bias. The ATS is DC biased at the asymmetric flux bias point $\varphi_\Sigma = \pm\varphi_\Delta = \frac{\pi}{2}$. There are in total two types of saddle points: the ones that are tilted to the left and the ones tilted to the right on a flux map.

Berdou et al PRX Quantum 4, 020350, 2022 also discloses flux maps. Reglade, Nature, volume 629, pages 778-783, 2024 also discloses flux maps: the buffer frequency varies as a function of differential and common fluxes, and there are saddle points in the plane defined by varying the differential and common fluxes. Other stabilization strategies for cat qubits, different from the parametric dissipation, are known, such as resonant dissipation or Hamiltonian confinement.

Quantum gate with cat qubits

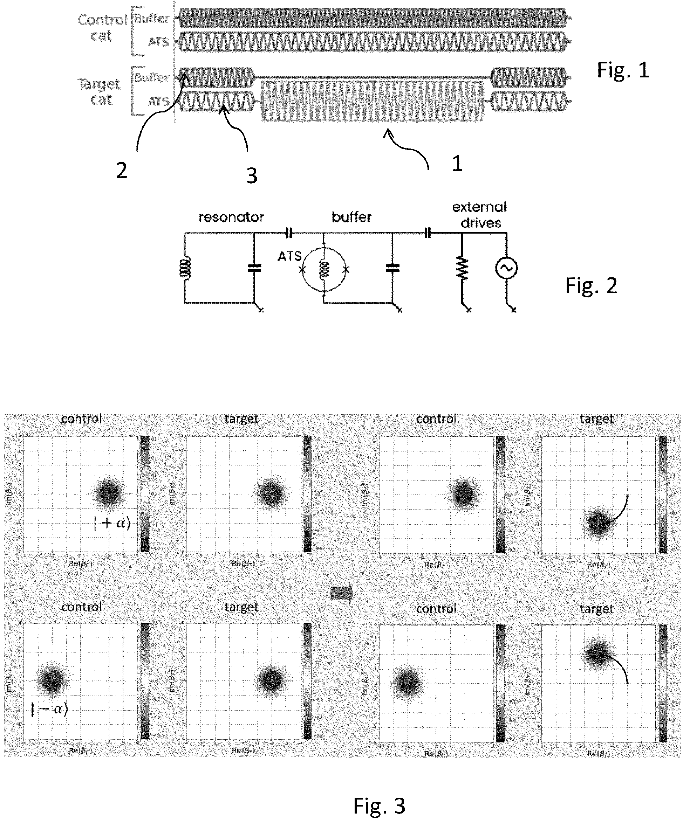

[Fig. 1] n an embodiment, a CNOT gate can be implemented through coupling the control qubit to the target cat qubit, for instance, via a linear capacitive coupling between the control qubit and the memory mode of the target cat qubit. This is referred to as the "ATS-pumped CNOT".

In this embodiment, the Hamiltonian enabling the gate, in the form of a longitudinal coupling between the control qubit and the target qubit, can be written as $H = g_{CNOT}(\alpha + a^\dagger)b^\dagger b$ where $g_{CNOT}$ is the CNOT interaction strength, *a* and b are ladder operators (specifically annihilation operators as already mentioned) for the control and for the target qubits, respectively.

In such current implementations, stabilization of the target qubit is subsequently turned off whilst applying a specific CNOT interaction pulse 1 on the four-wave mixing element (e.g. an ATS or another mixing element) of the target cat qubit at the resonant frequency of the control qubit. This is shown in the pulse sequence schematic of figure 1. Thus, the initially stabilized target cat qubit undergoes a dynamical interaction during "free flight". Said otherwise, the quantum state in the memory resonator of the target cat qubit, initially achieved via stabilization, is allowed to evolve "freely" without the constraining effects of stabilization, whilst simultaneously being subject to a dynamical interaction in the form of the CNOT interaction pulse.

In this exemplary schematic, the control qubit is shown as also being a dissipatively stabilized cat qubit, in particular being parametrically stabilized using its own ATS. The stabilization of the control cat qubit is not switched off during the CNOT gate.

However, in general, the control qubit does not need to be a cat qubit, whether stabilized via parametric dissipation, resonant dissipation, Hamiltonian confinement, or otherwise. The control qubit is realized more generally via some structure having a mode with a resonant frequency called control resonant frequency and configured to host a qubit within said mode with a confinement rate called control qubit confinement rate. The control qubit could be for instance a transmon, fluxonium, or other superconducting qubit. Alternatively, the control qubit can be other bosonic encoded qubits, such as a binomially encoded qubit, or so-called GKP qubit.

The structure which confines or stabilizes and hosts the control qubit may be further linearly coupled to the target cat qubit device such that the control qubit mode is itself linearly coupled with the ATS of the target cat qubit, and the control qubit is arranged such that a Rabi oscillation (periodic exchange of energy with a two-level system) is induced when it is subject to radiation having the control resonant frequency with a strength which is less than the control qubit confinement rate.

The stabilization on the target qubit is turned off (figure 1 shows that both the resonant drive 2 on the buffer of the target cat qubit and the coupling drive 3 on the ATS of the target cat qubit are turned off) and the target qubit is subjected to the longitudinal interaction called, as mentioned above, the CNOT interaction pulse 1, which is a microwave drive sent to the ATS of the target qubit at the resonant frequency of the control, e.g. the frequency of the memory of the control in the case of a dissipatively stabilized cat qubit. This interaction pulse causes the target qubit to conditionally rotate depending on the state of the control cat qubit. This drive is kept active during the duration $T_{CNOT}$. Once the desired conditional rotation is complete, i.e. after the $T_{CNOT}$ duration, the stabilisation on the target qubit is turned back on at the same time or very shortly after the CNOT pulse, ie the drive on the ATS of the target qubit, is turned off.

An alternative CNOT gate can be implemented through coupling the discrete-level control qubit (e.g. such as a transmon) to the target cat qubit via a so-called dispersive coupling, as described in Putterman, Harald, et al. "Hardware-efficient quantum error correction using concatenated bosonic qubits." arXiv preprint arXiv:2409.13025 (2024). Specifically, the $|0\rangle$ and $|1\rangle$ states of the control ("ancilla") qubit is encoded in the ground $|g\rangle$ and second excited $|f\rangle$ states, respectively, with $|e\rangle$ denoting the first excited state of the transmon positioned in between the two (although other encodings for the transmon could also work, as appropriate). The coupling between the control qubit and the target cat qubit is engineered to be "$\chi$-matched" dispersive interaction in the form $H = \chi_{ge}a^\dagger a|e\rangle\langle e| + \chi_{gf}a^\dagger a|f\rangle\langle f|$ with dispersive coupling strengths $\chi_{ge} \approx \chi_{gf}$ which can be controlled, for instance via the external flux threading a flux-tunable coupler which couples the control qubit and the memory mode of the target cat qubit. In particular, the $\chi$-matching condition can be achieved by designing the memory frequency to be higher than the control qubit frequency approximately by the magnitude of the control qubit's (e.g. transmon, although also fluxonium etc) anharmonicity given as the self-Kerr of the control qubit. This is referred to as the "dispersive interaction CNOT".

Crucially, in this alternative CNOT gate, stabilization of the target qubit is also turned off whilst applying a specific CNOT interaction pulse on the flux-tunable coupler to turn on the dispersive interaction between the target cat qubit and the control qubit. Thus, the initially stabilized target cat qubit undergoes a dynamical interaction during "free flight". Said otherwise, the quantum state in the memory resonator of the target cat qubit, initially achieved via stabilization, is allowed to evolve "freely" without the constraining effects of stabilization, whilst simultaneously being subject to a dynamical interaction in the form of the $\chi$-matched dispersive interaction. Again, once the desired conditional rotation is complete, i.e. after the $T_{CNOT}$ duration (which in this case is the duration of the pulse on the flux-tunable coupler to ensure the dispersive interaction is turned on), the stabilisation on the target qubit is turned back on at the same time or very shortly after the CNOT pulse, ie the drive on the ATS of the target qubit, is turned off.

The present Inventors have recognized that a limitation of the implementation of a CNOT gate with a target cat qubit is that releasing the stabilization on the target qubit temporarily exposes it to errors such as uncontrolled leakage from the cat subspace, which leads - after refocusing onto the cat subspace via re-stabilization - to bit-flip errors. This phenomenon - referred to as deformation and/or dephasing - is considered a limitation to the reduction of bit-flip errors on the data (i.e. target) qubit and it is expected that characterizing it and suppressing it should increase the performances by factors of magnitude. In particular, in order to implement effective mitigation techniques, the amount of said deformation/dephasing induced via the CNOT gate must be accurately and efficiently characterized. Kerr effect and other nonlinear effects that are unwanted upon performing of quantum operations

The Kerr effect is a widely known phenomenon in nonlinear quantum optics. The Kerr effect or quadratic electro-optic (QEO) effect for a quantized mode of light with frequency $\omega_c$, can be described by the normal ordered Hamiltonian

$$H_{Kerr} = \hbar\omega_c a^\dagger a - \hbar\frac{K}{2}a^\dagger a^\dagger aa$$

with $K$ the Kerr shift per photon. In electro-optics, involving photons at visible light frequencies, typical Kerr effects are so small that they are not visible on the single photon level, but in Circuit Quantum ElectroDynamics (CQED) and in particular in cat qubits, the non-linearities are so large that they are typically seen at the single photon level. Thus, and without willing to be bound by theory, some deformation arise during free flight of a resonator mode of a cat qubit and a part of this deformation is believed to be caused by the Kerr effect and is, in the approach described herebelow, characterized by Kerr terms. These include self-Kerr terms of the memory mode and cross-Kerr terms with the buffer mode. Other spurious (or unwanted) effects are also present in cat qubits: dephasing at rate $\kappa_\Phi$, thermal excitations $n_{th}$, unwanted coupling occurring with neighboring quantum systems in the vicinity of the memory, dynamical AC Stark shift, dynamical cross-Kerr and dynamical dephasing. In cat qubits stabilized by two-photons dissipation, using an ATS decreases the cross-Kerr spurious effect compared to other setups such as those using a transmon for the coupling, and altogether, this leads to the self-Kerr effect being at least in certain setups, the main cause for deformation of the memory mode of a target cat qubit during a CNOT gate. This self-Kerr effect has a main term called Kerr4 and a higher order term called Kerr6.

Calibration of quantum gates

The prior art includes methods of performing a CNOT gate between two cat qubits, and calibrations thereof. This includes the patent application EP4428767A1. This document discloses a method of implementing a CNOT gate between a control qubit and a target cat qubit. The prior art also includes EP4428765A1 a patent application disclosing a method of how to implement a simultaneous CXX gate (two CNOT gates performed simultaneously) on both data cat qubits coupled with an ancilla cat qubit. The prior art also includes the patent application filed on 5 March 2024 with application number EP24305336.0 and a further application number EP24305337.8 filed on 5 March 2024.

Altogether, these disclosures disclose a general method and specific ways of optimizing certain parameters, such as parameters of the compensation drive applied to cancel the spurious direct drive on the control, or the phase of the restabilization to catch the target qubit after the conditional rotation. These disclosures do not disclose calibrating the CNOT gate so as to minimize the detrimental effects of deformation of the target qubit during conditional rotation. In particular these disclosures offer no solution to characterize or reduce the Kerr effect or other spurious effect.

The prior art also includes methods of measurement for extracting deformation parameters of an initially prepared coherent state in a resonator allowed to evolve under bare free-flight, i.e. undergoing no engineered, no active interaction. This includes the article P. Campagne-Ibarcq, et al "Quantum error correction of a qubit encoded in grid states of an oscillator", Nature volume 584, pages 368-372 (2020). In this paper the Kerr effect is estimated to be of only 1 Hz, using a formula based on the cross-Kerr and the self-Kerr of the transmon. A similar method is also disclosed in Leghtas et al Science, Vol 347, Issue 6224 p. 853-857, using the formula $\chi_{ss} = \chi_{qs}^2 / 4\chi_{qq}$ .

Quantum tomography

Quantum tomography or state tomography is a process of determining the quantum state of a system. This technique addresses continuous variable systems with bosonic modes. State information is obtained by measuring operators like the Wigner operator or the Husimi-Q function operator.

In this respect, the prior art includes Kirchmair et al. "Observation of quantum state collapse and revival due to the single-photon Kerr effect." Nature 495.7440 (2013): 205-209. In this paper the Kerr effect is characterized by measurement of the Husimi-Q function at different n order (selective on Fock state n). But these authors do not study an interaction that can be applied to a qubit. They merely study a cavity housing a coherent state and its evolution.

The prior art also includes Essig et al, Phys. Rev. X 11, 031045 that discloses a method of Kerr estimation from simulations of number splittings. The prior art further includes Heeres et al, "Cavity State Manipulation Using Photon-Number Selective Phase Gates", Phys. Rev. Lett. 115, 137002, that discloses a Kerr estimation method based on measuring the dephasing between the different Fock states to estimate the Kerr effect, using a SNAP gate.

Altogether these documents do not relate to qubits (namely quantum states to be specificly used for quantum computing) not to speak of qubits experiencing a logic gate. In particular they do not disclose measuring the parameters of deformation of a cat qubit used as a target qubit in a logic gate.

Thus, there is no known solution to characterize a resonator in free flight under an engineered interaction, such as the conditional rotation applied to the target qubit in the CNOT gate. The present invention aims at providing a solution to this shortcoming of the prior art.

Cat-qubits belong to the family of the bosonic qubits that are encoded in a harmonic oscillator that we will also call the cat-qubit mode. Contrary to two-level systems, harmonic oscillators have infinitely many levels than can be used to encode information.

Tomography is an operation that enables to get the full knowledge of the state of a quantum system. This operation requires the measurement of different observables. For a two-level system, the measurement of the observable X, Y and Z are sufficient to fully characterize the state of the system. For a harmonic oscillator that has infinitely many energy levels, one has to make assumptions on the system to be able to perform the tomography with a finite number of measurements. One generally assumes the system lies within the low energy Fock states subspace. Several form of tomography can be performed experimentally in superconducting circuits among them the Husimi-Q function or the Wigner function and its corresponding characteristic function. These functions are defined over the phase space of the oscillator. We generally note the two quadratures of the phase-space I and Q. One can directly measure these functions by sampling a finite portion of the phase-space. From this finite sampling and the assumption of the system being with low energy subspace, one can use maximum-likelyhood algorithms to reconstruct the state of the system.

One can also assume the system lies in a more specific subspace. For instance, in this invention, the stabilization mechanism limits the possible states to be within the span of 2N coherent states. Hence, with this assumption, less measurements are required to perform the tomography of the system. For example, in the case of a two component cat qubit that is defined within the span of the two coherent states $\{|\alpha\rangle, |-\alpha\rangle\}$, one can either perform the full Wigner tomography of the state or measure the effective X, Y or Z just as with a two-level physical system. The former is mostly used to tune and characterize the superconducting circuit operation, as described in detail below, and the latter during computation. In that specific case, the measurement of X is also the parity of the number of photon in the state and Z is a measure of whether the population is on one or the other coherent state. Another example consists in defining a qubit in the even manifold of the span of four coherent states $\{|\alpha\rangle, |i\alpha\rangle, |-\alpha\rangle, |-i\alpha\rangle\}$ in the so-called four-component cat paradigm. It should be clear that performing one full tomography of a system is more complete than measuring some observables while making assumptions on the possible states. As a consequence, one can generally reconstruct the average values of these observables using the full tomography of the system.

Most preferably, in the context of cat-qubits, tomography comprises measuring the Wigner function or its characteristic function. Alternatively, but less preferably, the Husimi-Q function also contains all the information in principle. The Wigner function at a point $\beta$ of the phase-space can be determined by measuring the parity of the field after displacing it by an amount $-\beta$. The characteristic function at a point $\beta$ of the phase-space can be determined by measuring the average value of the displacement operator $D(-\beta)$. In the following, we describe in particular the Wigner function because it contains more readily available information for cat-qubits, although the skilled person would understand the analogous method for performing Husimi-Q tomography.

As an example, in a two-component cat qubit, measuring W is the same as measuring the Wigner function in 0. Thus, to measure the Wigner function, one needs to displace the state of the system, then to measure the parity. Displacing the state corresponds to sending a finite duration pulse with a frequency close to the mode frequency such that the mode frequency lies within the pulse frequency spectrum. This pulse is made with a microwave source that is connected to the mode via a transmission line coupled to the mode. This coupling maybe capacitive, inductive or galvanic. The amplitude and phase of this pulse defines the amplitude and phase of the displacement.

Measuring the parity can be done indirectly by coupling the mode to a two-level system and by mapping the parity of the field in the mode to the state of the two-level system. This mapping can be achieved by realizing an Hamiltonian that couples the photon number operator of the mode $a^\dagger a$ to either the Z or the X operator of the two-level system

$$H_Z = \frac{\chi}{2}\, a^\dagger a\, Z \quad \text{or} \quad H_X = \frac{\chi}{2} a^\dagger a\, X\,.$$ The former can be achieved using the so-called dispersive interaction, the latter by using the so-called longitudinal interaction that can be activated with a parametric pump at the two-level system frequency. The state of the two-level system will rotate around the Z-axis (respectively X-axis) at a speed that depends on the photon number in the mode. By tuning the duration of the interaction to $\frac{\pi}{\chi}$, one can ensure that for even photon numbers in the oscillator, the two-level system accumulates an integer number of rotations and that for odd photon number, it accumulates an half-integer number of rotation. In the case of the dispersive interaction, if the two-level system starts in state $|+\rangle$ it will end up in state $|+\rangle$ if there is an even number of photons in the mode and in state $|-\rangle$ if there is in an odd number of photons. By measuring X, one determines if the qubit is in state $|+\rangle$ or $|-\rangle$ and hence determines the photon number parity. In the case of the longitudinal interaction, if the two-level system starts in state $|0\rangle$ it will end up in state $|0\rangle$ if there is an even number of photons in the mode and in state $|1\rangle$ if there is in an odd number of photons. By measuring Z, one determines if the qubit is in state $|0\rangle$ or 11) and hence determines the photon number parity.

An alternative Wigner tomography protocol suitable for cat qubits is as described in Réglade, U., Bocquet, A., Gautier, R., Cohen, J., Marquet, A., Albertinale, E., Pankratova, N., Hallén, M., Rautschke, F., Sellem, L.A. and Rouchon, P., 2024. Quantum control of a cat qubit with bit-flip times exceeding ten seconds. Nature, 629, 778-783.

Unfortunately, the basic interaction required to perform the Wigner tomography i.e. the coupling to the photon number operator $a^\dagger a$ is incompatible with the coherent state stabilization described previously. This is also true for its characteristic function that relies eighter on the coupling to $a^\dagger a$ or $(a + a^\dagger)$. This is not accidental: it is actually a wanted effect of the stabilization mechanism, which purpose is to inhibit spurious couplings. As a result, the Wigner function cannot be measured while the cat-qubit stabilization is on. Thus, in the context of a Wigner tomography, the two-photon exchange interaction (i.e. the stabilization mechanism) may be turned off in order to perform the tomography operations (e.g., in the embodiments comprising a parametric pump, then by turning off the parametric pump).

**Features and advantages of the invention**

The invention is thus a method of characterizing a quantum device, comprising a step of observing by quantum tomography evolutions of an oscillator of the quantum device initially prepared with at least one coherent state, and for example in one coherent state or several superposed coherent states, and being subsequently subjected to a dynamical interaction, and a subsequent step of using tomographies obtained during the step of observing to characterize a non-linear effect experienced by the oscillator upon performance of the dynamical interaction.

The invention is advantageous since the use of a coherent state allows characterizing the non-linear effects experienced by the oscillator on the tomography images.

The following features are optional and advantageous:

- the step of observing may include varying a number of photons of the prepared oscillator.
- the step of observing may include varying an interaction strength of the dynamical interaction.
- the oscillator may be a memory of a data qubit and the dynamical interaction is an interaction with an ancilla qubit.
- the dynamical interaction may be a microwave drive for a CNOT gate, said oscillator being a memory of a target qubit of said gate.
- the quantum device may use a cat code, a stabilization used for a cat state of the oscillator being turned off for the dynamical interaction being applied to said oscillator.

- the observing may be performed through a Wigner tomography or a Husimi-Q tomography of the oscillator.
- said using tomographies may include performing analysis to account for distinct non-linear effects for the oscillator including self-Kerr and dephasing.
- said using tomographies may include performing analysis to estimate a fourth order self-Kerr magnitude and a sixth order self-Kerr magnitude.
- said using evolutions may include comparing observations obtained by quantum tomography upon the step of measuring with simulations made numerically by diagonalizing a Liouvillian describing the quantum device or by solving numerically an Ordinary Differential Equations describing the quantum device.
- observing evolutions may be performed upon a range of two orders of magnitude of time.
- observations may be obtained, upon the step of observing, by performing several independent sequences, the dynamical interaction being performed upon each of the sequences on a identically initially prepared oscillator and with a duration specific to the sequence and then interrupted at the end of the duration, a tomography being then performed in each sequence to capture the state of the oscillator at the moment of the interruption.
- the oscillator may be prepared with a single coherent state

The invention is also a computing system comprising a quantum device having an oscillator operated in a quantum state and an interaction setup to apply a dynamical interaction to said oscillator, the computing system also comprising a quantum tomography setup observing said oscillator, the computing system further comprising a processing routine to characterize the quantum device through initial preparation of the oscillator in one coherent state or several superposed coherent states, subsequent performing of the dynamical interaction with observation of an evolution of the oscillator by the quantum tomography setup during said performing the dynamical interaction, and a subsequent characterization of a nonlinear effect experienced by the oscillator upon performance of the dynamical interaction based on recorded tomographies.

The computing system may further comprise a controller varying an implementation parameter of the dynamical interaction such as the interaction strength of the dynamical interaction or a number of photons in the oscillator.

In an embodiment, the invention is used to characterize the deformation of a cat qubit under a dynamical interaction, which is a CNOT interaction used to perform a CNOT gate between the cat qubit as the target qubit and a control qubit (which may optionally be a cat qubit, but also may be another type of qubit, as already mentioned).

## List of figures

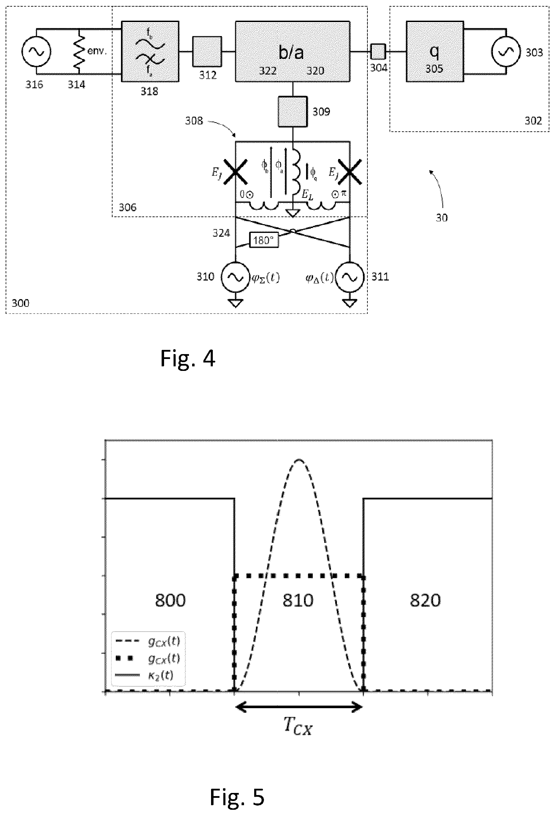

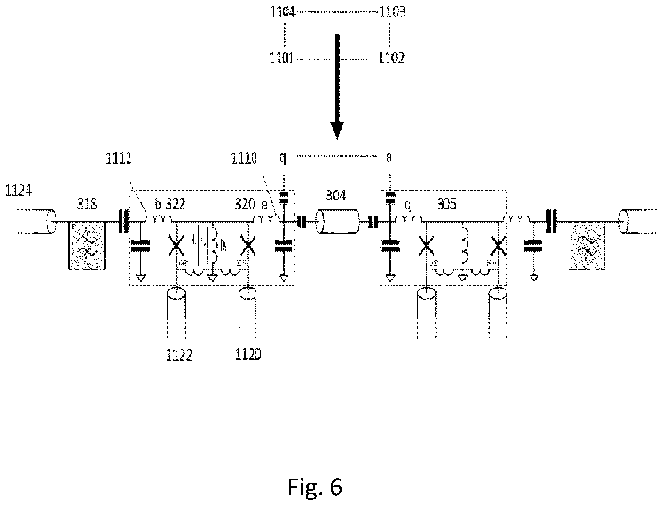

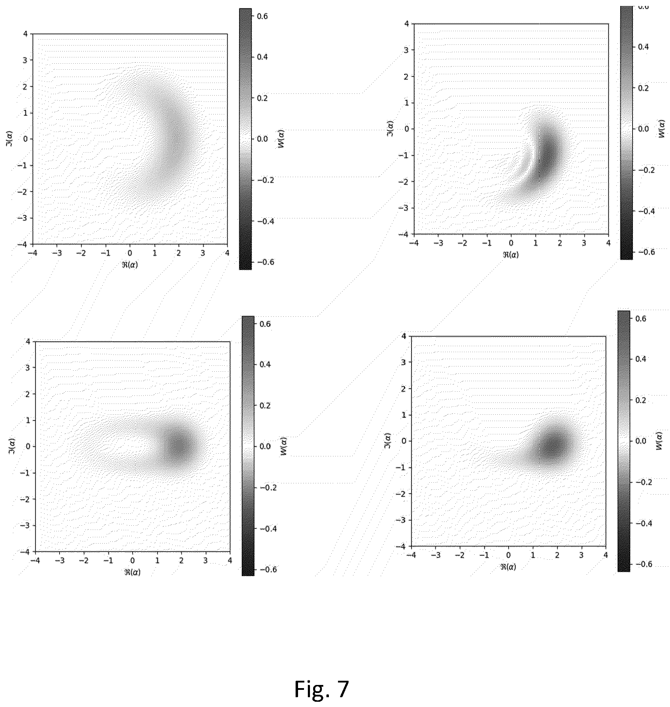

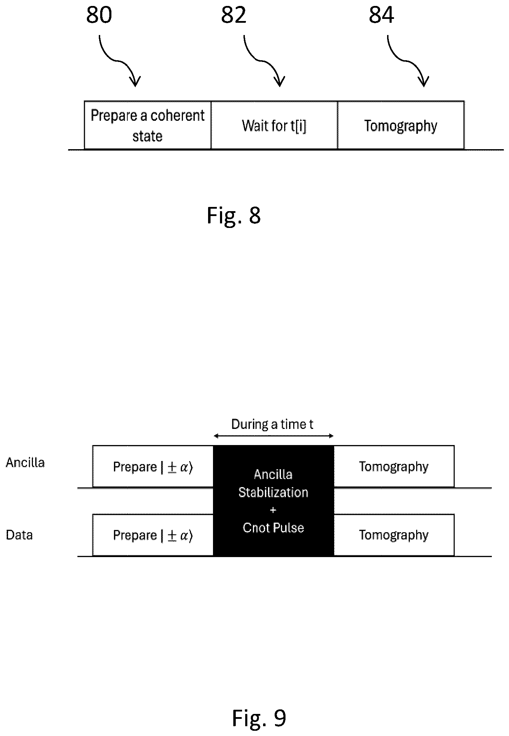

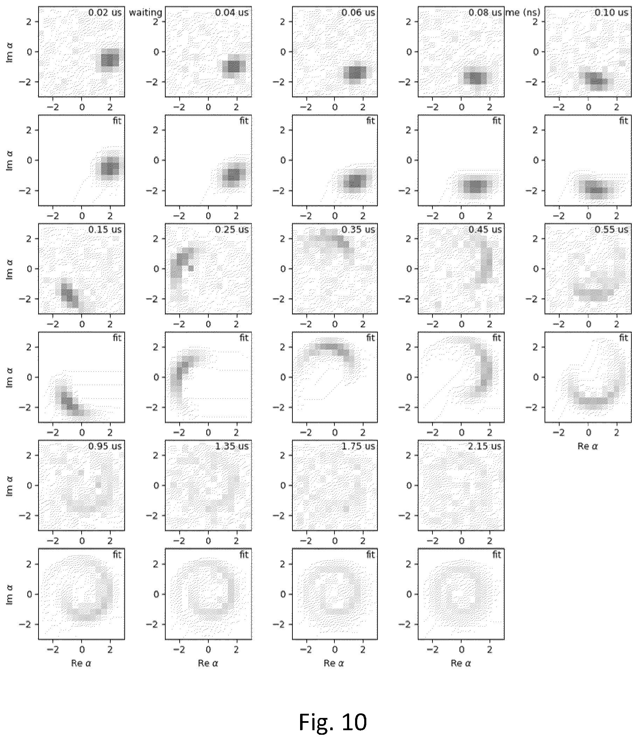

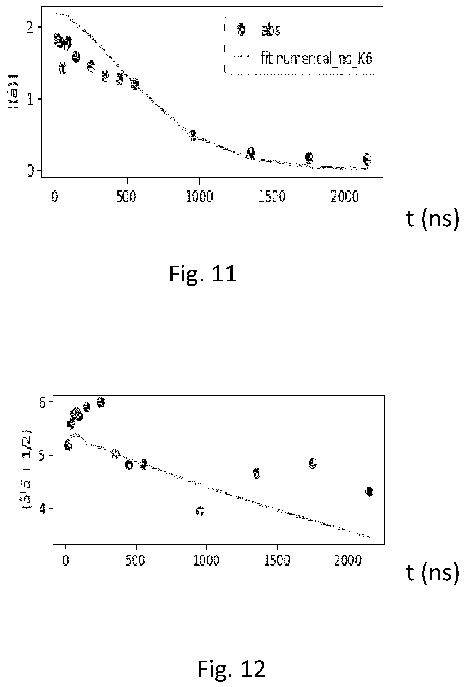

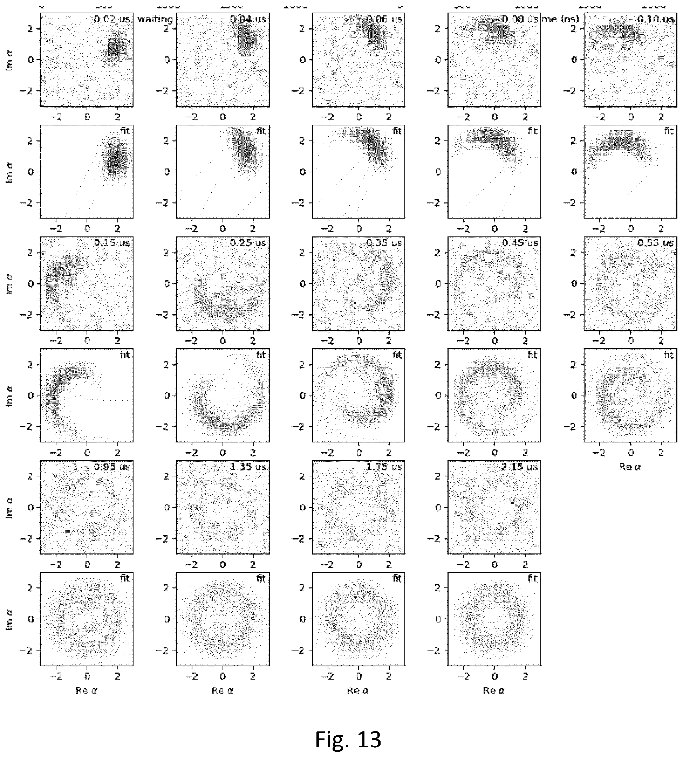

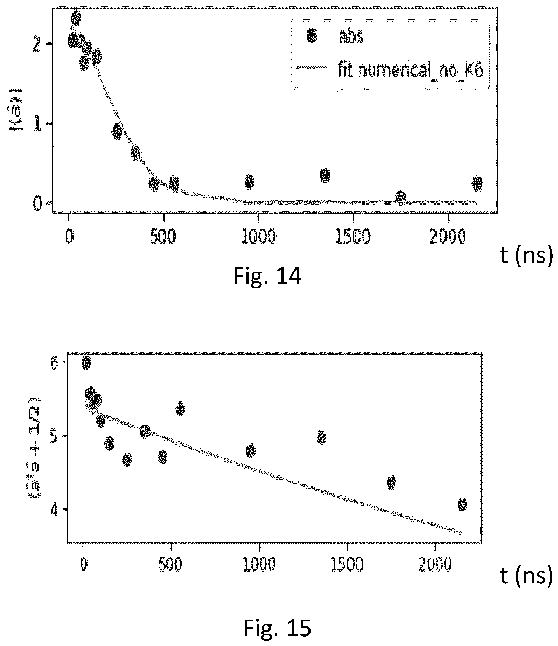

. Figure 1 is a representation of the time sequence of a CNOT gate.
. Figure 2 is an exemplary circuit for a cat qubit.
. Figure 3 is a representation of the effect of a CNOT gate on the target qubit, in a symmetrized picture.
. Figure 4 is an exemplary circuit for a CNOT gate.
. Figure 5 shows a signal timing for operations of a CNOT gate.
. Figure 6 is an exemplary circuit coupling four dissipatively stabilized cat qubits.
. Figure 7 is a representation of two different parts of the leakage from the cat subspace during a CNOT gate.
. Figure 8 is a general representation of a time sequence of a protocol to measure the effect of an interaction.
. Figure 9 is a more specific representation of a time sequence of a protocol to measure the effect of a CNOT gate.
. Figure 10 is a set of Wigner tomography of the target cat qubit of a CNOT gate during a deformation characterization according to the invention.
. Figures 11 and 12 show plots of numerical values of operators as a function of the length of the interaction.
. Figure 13 is, like figure 10, a set of Wigner tomography of the target cat qubit during a deformation characterization according to the invention, with a stronger CNOT interaction.
. Figures 14 and 15 show again plots of numerical values of operators as a function of the length of the interaction, in relation to the measurements of figure 13.

## Description in relation to the figures

A cat qubit is defined as a two-dimensional manifold spanned by the two cat states. Any physical realization of these systems is affected by imperfections that lead to deviations of the quantum state from the desired $|\alpha\rangle$, $|-\alpha\rangle$ and their superpositions. These errors affect the system in such a way that the complex plane representations of states is deformed and drift towards the complex plane origin over time. Stabilization - also coined confinement - protects the system against these errors, effectively fixing the coherent states $|\alpha\rangle$ and $|-\alpha\rangle$ - and their superpositions - in place in the complex plane. In particular, R. Lescanne et al. (2020) demonstrated that cat qubits can be stabilized with a non-linear conversion between two photons of a first mode a - a memory mode or cat qubit mode - and one photon of a second mode b - called buffer mode.

Stabilized cat qubits are not error-free despite the stabilization. Bit-flip errors are unwanted transitions between the two qubit states. Thus a bit-flip error occurs when a confined coherent state transforms into the other confined coherent state: the $|\alpha\rangle$ coherent state transforms into the $|-\alpha\rangle$ coherent state or vice versa.

Exemplary cat qubit and gate circuits

[Fig. 2] Figure 2 shows a schematic of an exemplary circuit. At the hardware level, a non-limiting model for the circuit consists of a linear resonator - where the quantum information is stored as $|\alpha\rangle$, $|-\alpha\rangle$ and their superpositions - referred to as the memory of the qubit, with an additional resonator referred to as the buffer of the qubit. The buffer includes a circuit element called asymmetrically threaded SQUID (ATS), which enables the stabilization of the memory states. The ATS is a SQUID (Superconducting Quantum Interference Device) loop shunted by a linear inductor, creating two loops through each of which a magnetic flux can be threaded to enable different operations. The simplified circuit of figure 2 shows a lumped-element model of a circuit including the elements enabling the stabilization. As will be appreciated, in practice the memory and buffer modes will be distributed along the entirety of the circuit, but having significantly different distributions at different regions (e.g. with the memory mode being predominantly distributed at the memory resonator and the buffer mode being predominantly distributed at the buffer resonator).

In this example, the stabilization (i.e. confinement) is activated with two microwave drives, already mentioned in relation to figure 1, one to the buffer resonator and the other to the ATS, such that the sum of these two frequencies is equal to twice the frequency of the memory mode. These drives are introduced through the external drives.

Cat qubits can more generally be stabilized or confined by one or more the following exemplary schemes:

- a parametric dissipative stabilization (already mentioned), with jump operator $L_2 = \sqrt{\kappa_2}(a^2 - \alpha^2)$, where $\kappa_2$ is the two-photon dissipation rate, a is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction, an ATS or a DC bias coupled to one or more Josephson junctions (for which the European patent application EP 23306839.4 was filed)- to the cat qubit mode a and by engineering the Hamiltonian $\frac{H}{\hbar} = g_2(a^2 - \alpha^2)b^\dagger$, where b is the photon annihilation operator of the buffer mode b and $g_2$ is the two-photon coupling rate, by applying to the four-wave mixing device a pump at frequency $|2f_a - f_b|$ and a drive of the buffer mode at frequency $f_b$ provided $g_2 < \kappa_b$.

- a dissipative squeezing stabilization, with jump operator $L_{SC} = \sqrt{\kappa_{SC}}\left(\left(\cosh(r)a + \sinh(r)e^{i\theta}a^\dagger\right)^2 - \alpha^2\right)$, where $\kappa_{SC}$ is the squeezed two-photon dissipation rate, a is the photon annihilation operator, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian $\frac{H}{\hbar} = g_{SC}\left(\left(\cosh(r)a + \sinh(r)e^{i\theta}a^\dagger\right)^2 - \alpha^2\right)b^\dagger + h.c.$, where b is the photon annihilation operator of mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

- a variant of the previous dissipative squeezing stabilization scheme, for which the European patent application EP 23175147.0 was filed.

- a Kerr Hamiltonian $\frac{H}{\hbar} = \frac{K}{2}(a^{\dagger 2} - \alpha^2)\left(a^2 - \overline{\alpha^2}\right)$, where K is the amplitude of the Kerr Hamiltonian, a is the photon annihilation operator, and $|\alpha|^2$ is the mean photon number.

- a detuned Kerr Hamiltonian $\frac{H}{\hbar} = \frac{K}{2}(a^{\dagger 2} - \alpha^2)\left(a^2 - \overline{\alpha^2}\right) - \Delta a^\dagger a$, where K is the amplitude of the Kerr Hamiltonian, a is the photon annihilation operator, $\alpha$ is a complex number defining the cat qubit, and $\Delta$ is the detuning factor.

- a two-photon exchange (TPE) Hamiltonian $\frac{H}{\hbar} = g_2(a^2 - \alpha^2)\sigma_+ + h.c.$, where $g_2$ is the complex two-photon coupling rate, a is the photon annihilation operator, $\alpha$ is a complex number defining the cat qubit, and $\sigma_\pm$ are the

lowering and raising operators of the two-level system. This Hamiltonian can be engineered in the same way as the parametric dissipative stabilization.

- a resonant dissipative stabilization, with jump operator $L_2 = \sqrt{\kappa_2}(a^2 - \alpha^2)$, where $\kappa_2$ is the two-photon dissipation rate, a is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $\frac{H}{\hbar} = g_2(a^2 - \alpha^2)b^{\dagger} +$ h. c., where b is the photon annihilation operator of the buffer mode b provided the mode frequencies verify substantially $2f_a = f_b$ and $g_2 < \kappa_b$ to which a drive of the buffer mode at frequency $f_b$ is added.

In particular, the dissipative stabilization schemes (including the resonant dissipative stabilization scheme) have been found to be particularly effective in realizing cat qubits with very low bit-flip errors. Further, combinations of the various dissipative stabilization schemes with other stabilization schemes, such that there is still some component of dissipative stabilization, are also particularly effective.

The action of a CNOT gate is shown in the following truth table, where the first bit is the state of the control qubit and the second bit is the state of the target qubit. Should the first bit be 0, the gate keeps both bits unchanged. Should the second bit be 1, the gate keeps the first bit unchanged and performs an X gate on the second bit, i.e. changes the second bit to its opposite.

| Input state | Output state |
|---|---|
| 00 | 00 |
| 01 | 01 |
| 10 | 11 |
| 11 | 10 |

A natural representation of the CNOT is to write that the target qubit stays idle when the control qubit is in the coherent state $|\alpha\rangle_C$ (in the following, subscript C refers to the control qubit, and subscript T refers to the target qubit) and rotates by $\pi$ (in the complex plane) when the control qubit is in the coherent state $|-\alpha\rangle_C$.

[Fig. 3] therwise, adopting a symmetrized picture by performing a frame rotation of the target qubit so that it always rotates, but by $+\pi/2$ or $-\pi/2$ in the complex plane around the origin depending on the state of the control qubit, as shown in figure 3, leads to the following truth table:

| Input state | Output state |
|---|---|
| $\|\alpha\rangle_C \otimes \|\alpha\rangle_T$ | $\|\alpha\rangle_C \otimes \|\alpha - \exp(-i\pi/2)\rangle_T$ |
| $\|-\|\alpha\rangle_C \otimes \|\alpha\rangle_T$ | $\|-\alpha\rangle_C \otimes \|\alpha - \exp(i\pi/2)\rangle_T$ |
| $\|\alpha\rangle_C \otimes \|-\alpha\rangle_T$ | $\|\alpha\rangle_C \otimes \|-\alpha * \exp(-i\pi/2)\rangle_T$ |
| $\|-\alpha\rangle_C \otimes \|-\alpha\rangle_T$ | $\|-\alpha\rangle_C \otimes \|-\alpha * \exp(i\pi/2)\rangle_T$ |

Figure 3 shows the two first lines of the truth table. In this picture, the global phase of the target cat basis has been rotated by $\pi/2$ after the CNOT but can be taken into account in software.

[Fig. 4] he physical system on which the CNOT is implemented consists of two coupled circuits. One circuit is the control qubit, the other circuit the target cat qubit, as shown in figure 4.

Here, the quantum system 30 comprises a target cat qubit device 300 and a control qubit device 302 connected by a coupler 304, which may be a linear electromagnetic coupler 304, or it may be a flux-tunable coupler 304 configured to place the target cat qubit device 300 and a control qubit device 302 within the so-called $\chi$-matching condition described in more detail below.

In the example described herein, the target cat qubit device 300 comprises a non-linear superconducting circuit 306 to which several microwave sources 310, 311, 316 and a load 314 are connected.

The non-linear superconducting circuit 306 comprises a linear microwave network 320-322 such that, when coupled via a linear coupler 309 to an ATS 308 which acts as an inductive element, the non-linear superconducting circuit 306 comprises at least two normal modes (or eigenmodes) a and b at frequency $f_a$ and $f_b$ which participates in the ATS.

This participation means that a portion or the entirety of the mode magnetic energy is stored in the ATS. This participation can be quantified by the zero-point fluctuation of the superconducting phase across the ATS, noted $\varphi_a$ for mode a and $\varphi_b$ for mode b.

Examples of embodiments for the linear microwave network are known. For instance, among these embodiments, the non-linear superconducting circuit 306 can be a two-mode hybridized system (also known as "galvanic cat", for which patent applications EP4383139A1 and EP4383140A1 were filed) for which two modes couple strongly via the ATS.

When an external DC magnetic field is set such that a 0 mod$2\pi$ magnetic flux threads one of the loop and a $\pi$ mod$2\pi$ threads the other loop (or conversely), the ATS Hamiltonian has its "sin sin" form. As a reminder, when biased at its working point the Hamiltonian of the ATS embedded in the cat qubit device has a "sin sin" form

$$H_{ATS} = -2E_J \sin\big(\varphi_\Sigma(t)\big)\sin(\varphi) + \frac{E_L}{2}\big(\varphi - \varphi_\Delta(t)\big)^2$$

where $\varphi = \varphi_a(a + a^\dagger) + (\varphi_b(b + b^\dagger)$ is the total superconducting phase difference across the ATS, $\varphi_a$ is the zero-point fluctuation of the phase of the cat qubit mode across the ATS and $\varphi_b$ is the zero-point fluctuation of the phase of the buffer mode across the ATS, $E_J$ is the Josephson energy of a side junction and $E_L$ is the inductive energy of the central inductance, $\varphi_\Sigma(t)$ corresponds a common flux modulation of the two loops of the ATS and $\varphi_\Delta(t)$ corresponds to a differential flux modulation of the two loops of the ATS. The former can be implemented by sending microwave radiations on the two flux lines of the ATS out of phase, the latter can be implemented by sending microwave radiations on the two flux lines of the ATS in phase. Parametric pumping of the ATS is typically done by pumping the common flux as pumping the differential flux merely displaces the modes coupled to the ATS. As an example, by pumping the common flux at the frequency $f_p = 2f_a - f_b$, $\varphi_\Sigma(t) = \varepsilon_{2ph}\cos(2\pi f_p t)$ the non-linear part of Hamiltonian writes in the rotating frame

$$H_{2ph} = \frac{E_J \epsilon_{2ph} \varphi_a^2 \varphi_b}{2}(a^2 b^\dagger + h.c.)$$

which is typically the two-to-one photon exchange Hamiltonian needed to engineer the two-photon stabilization. The abbreviation h.c. means the Hermitian conjugate and the abbreviation 2ph means 2 photons.

In the context of an embodiment, the physical realization of a CNOT gate between a control qubit with annihilation operator q and a stabilized cat qubit with annihilation operator a usually relies on the use of the following two ingredients.

1) The confinement of the control qubit such that a microwave drive at its resonant frequency results in a Rabi oscillation. This is typically native in two-level system qubits (e.g. such as transmons). In cat qubit the confinement is engineered via parametric interactions and the Rabi oscillation is caused by an additional microwave.

2) The addition in the circuit of a 'CNOT' Hamiltonian or 'longitudinal' Hamiltonian with the formula $H_{CNOT}/\hbar = g_{CNOT}(q + q^\dagger)(a^\dagger a - \alpha^2)$ where $g_{CNOT}$ is the amplitude of the Hamiltonian (it is chosen real without loss of generality). This longitudinal coupling can be seen as a drive on the control qubit (first factor) which amplitude depends on the photon number of the target cat qubit (second factor). For this Hamiltonian to be effective on the target cat qubit, one also needs to turn-off the confinement on the target cat qubit, hence the target cat qubit confinement strength should be controllable.

To engineer the CNOT Hamiltonian between the control qubit and the target cat qubit one needs to:

- couple the control qubit to the ATS such that the phase difference across the ATS writes $\varphi = \varphi_a(a + a^\dagger) + \varphi_b(b + b^\dagger) + \varphi_q(q + q^\dagger)$
- pump the common flux at the control qubit frequency $f_q$, $\varphi_\Sigma(t) = \varepsilon_{CNOT}\cos(2\pi f_q t)$

In the rotating frame, the parametric part of the Hamiltonian writes

$$H_{CNOT} = -E_J \epsilon_{CNOT} \varphi_q (q + q^\dagger)$$

This Hamiltonian can be written to highlight the desired dynamics

$$H_{CNOT} = \hbar g_{CNOT}(q + q^\dagger)(a^\dagger a - \alpha^2) - E_J \epsilon_{CNOT} \varphi_q(q + q^\dagger)$$

with $g_{CNOT} = E_J \epsilon_{CNOT} \varphi_q \varphi_a^2 / \hbar$ .

Since the buffer is a lossy mode coupled to a cold environment, one can further assume that $b^\dagger b = 0$, such that the engineered Hamiltonian is

$$H_{ATS} = H_{CNOT} - E_J \epsilon_{CNOT} \varphi_q (q + q^\dagger)(1 - \varphi_a^2 \alpha^2) + E_J \epsilon_{CNOT} \frac{\varphi_q^3}{2}(q^{\dagger 2} q + q^\dagger q^2).$$

This Hamiltonian is close to the CNOT Hamiltonian except for two additional terms. The first corresponds to a linear drive with strength $E_J \epsilon_{CNOT} \varphi_q (1 - \varphi_a^2 \alpha^2) / \hbar$ . This linear drive can readily be compensated by sending a counter drive directly on the control qubit with the correct relative phase and amplitude that can both be tuned experimentally.

The accuracy and scope of the compensation can be greatly increased by pumping the differential flux of the ATS with the correct phase and amplitude which writes, at first order in $\varepsilon_{CNOT}$, $\varphi_\Delta(t) = \frac{2E_J}{E_L} \varphi_\Sigma(t)(1 - \varphi_a^2 \alpha^2)$ . Although the amplitude and phase of the drive can be computed analytically, it is fine-tuned experimentally by ensuring the control qubit undergoes no drive in the right circumstances. Experimentally, this compensation is much more appropriate than the counter drive on the control qubit because it directly compensates the spurious linear drive where it originates from (i.e., at the ATS) and does not only try to compensate its main consequences (i.e., the displacement of the control qubit).

The second term cannot typically be fully compensated in a simple manner in view of the design choices made for the present embodiment. Instead, the system may be defined such that the amplitude of this term is much smaller than the amplitude of the CNOT Hamiltonian. In other words, $E_J \epsilon_{CNOT} \frac{\varphi_q^3}{2} < E_J \epsilon_{CNOT} \varphi_q \varphi_a^2$ , which simplifies into $\varphi_q^2 / 2 \ll \varphi_a^2$ . Typically, $\varphi_q \le \varphi_a / 2$ is sufficient minimize the detrimental impacts of this second term.

In summary, provided these two conditions (compensation and smaller amplitude for the second term) are met, the ATS Hamiltonian $H_{ATS}$ can be engineered such that it is close enough to the perfect CNOT Hamiltonian, herein also referred to as the "ATS-pumped CNOT".

For clarity, the set-up applying the external DC magnetic field is not shown, but can be applied via the two bottom mutual inductances of the ATS. A typical implementation consists in interleaving a bias-tee connected to a DC current source to input DC current into the system while letting the microwave radiations go through. The microwave sources 310 and 311 are set-up to modulate respectively the common and differential flux in the ATS which is required to activate parametric interactions. To clearly distinguish the roles of the two sources in the Hamiltonian, a microwave network 324 which applies the correct phase offset is provided in the schematic. Alternatively, each microwave source can be simply coupled to a single node of the ATS and their relative phase and amplitude can be set so as to get the desired flux modulation. In that case, to modulate the common flux the two sources need to address the circuit out of phase one from each other and to modulate the differential flux, the two sources need to address the circuit together in phase.

When the microwave source 310 is set at the frequency $f_p = |2f_a - f_b|$, the non-linear superconducting circuit 306 performs the 2-to-1 photon conversion between a first mode a referenced 320 and a second mode b referenced 322. To convert this 2-to-1 photon conversion into two-photon dissipation, the mode b is selectively coupled to the load 314 via a linear coupler 312 and a microwave filter 318 configured as a band pass filter with a frequency $f_b$. Alternatively, the microwave filter 318 may be configured as a band stop filter at a frequency $f_a$, and may be placed in between the environment and the two modes to isolate the first mode and thus prevent the first mode from suffering additional losses coming from unwanted coupling to the load 314. Alternatively, the microwave filter 318 may be configured as a low-pass (respectively high-pass) filter if $f_a > f_b$ (resp $f_b > f_a$). In other embodiments, the microwave filter 318 can be omitted when coupling between the load 314 and substantially only the second mode can be established. The first mode a has a high-quality factor, and the second mode b has a low-quality factor.

To perform cat qubit stabilization in mode a, which requires two-photon drive and dissipation, the b mode is eventually driven at its resonant frequency $f_b$. This drive is typically performed by the microwave source 316 set at frequency $f_b$. Alternatively the drive can be performed by the microwave sources 310 or 311 provided they are set-up to supply both frequency $f_p$ and $f_b$. In the following, first mode a hosts a cat qubit, and is also known as the cat qubit mode, whereas second mode b is used as a buffer in between the cat qubit and the environment. When the CNOT gate is not performed, i.e., in a so-called "idle mode", the command circuit controlling the entire system is configured to perform the data (target) cat qubit stabilization exclusively.

The control qubit and the configuration required to perform the CNOT gate will now be described.

In the example of the figure 4, the control qubit device 302 comprises a mode q 305 with resonant frequency $f_q$

which hosts the control qubit. In various embodiments, the control qubit device 302 can be any superconducting qubit such as a transmon qubit, a flux-qubit or a fluxonium qubit or any bosonic qubit encoded in a resonator such as a Kerr cat qubit (detuned or not), another stabilized cat qubit device (squeezed or not), or a cat qubit confined via a two-photon exchange Hamiltonian.

As described above, the control qubit 305 is coupled to the target cat qubit device 300 via a small linear coupler 304. The linear coupler 304 is arranged such that the control qubit 305 slightly hybridizes with the cat qubit device 300 which leads to a small participation of the control qubit in the cat qubit device ATS 308. This participation is denoted $\varphi_q$. As described above with respect to the second spurious member of the engineered Hamiltonian which is not compensated, the fact that this participation remains small compared to the participation $\varphi_a$ of the target cat qubit mode is critical to accurately implement the CNOT Hamiltonian. In various embodiments, coupler 304 can be capacitive, inductive, galvanic or mediated via a resonating bus coupler or an additional linear microwave network. In the embodiment shown on the above figure, the control qubit device 302 is coupled to the first mode a 320. In other embodiments, control qubit device 302 can be coupled to the second mode b 322. As modes a and b are typically delocalized in the microwave network a/b 320-322, coupling to a specific location does not necessarily mean coupling to a specific mode unless the linear microwave network and the ATS are specifically designed to do so.

The control qubit device 302 also comprises a microwave source 303 which is coupled to the control qubit 305 in order to have the ability to drive it. Microwave source 303 may be used to compensate the linear drive arising from the CNOT Hamiltonian engineering.

As explained above, a further limitation on the control qubit device 302 is that the non-linear superconducting circuit 306, the cat qubit mode a participates strongly in the ATS 308 as compared to the control qubit mode 305. When the control qubit mode q participates into the ATS via a small linear coupling with the cat qubit mode a in order to perform the CNOT gate - typically, capacitive coupling with capacitance value small compared to the either mode capacitance, inductive coupling with inductance value small compared to the either mode inductance or coupling mediated by a detuned bus resonator -, this coupling is moderate in general. More precisely, the two coupled modes (here a and q, alternatively b and q) detuning (i.e., the frequency difference $\Delta = |f_a - f_q|$) also plays a role. Indeed, if the two modes have the same resonant frequency, any slight linear coupling would lead to full hybridization and to $\varphi_a \approx \varphi_q$. However, with typical detunings $\Delta/2\pi$ greater than a few tens of MHz, the participation asymmetry is achieved with standard linear couplings.

As explained earlier, the weaker coupling of the control qubit q to the ATS 308 (compared to the target cat mode a coupling to the ATS 308) is key. If the linear coupling is characterized by a strength g as known in the field, then one also needs to ensure the detuning $\Delta$ between the control qubit mode q and the mode it is coupled to (a,320 or b,322) is such that $g < \Delta$. Although this provides design rules, a full microwave simulation or circuit diagonalization of the circuit layout is required to precisely compute the values of $\varphi_a$, $\varphi_b$, $\varphi_q$. This feature helps to ensure that the CNOT gate can be performed accurately and that the circuit uses a single ATS in its elements for the CNOT gate, and that parametric pumping of the ATS of the target cat qubit has a single purpose at all times.

[Fig. 5] Figure 5 shows exemplary signal timings for operations of a CNOT gate (also named CX gate, as already mentioned). During idle mode, the data cat qubit is stabilized with two-photon dissipation $\kappa_2$ - this is idle operation 800. When the gate starts, this dissipation is turned off such that the CNOT Hamiltonian can be effective under gate operation 810. Finally, after a time $T_{CNOT} = \pi/(4\alpha g_{CNOT})$ the CNOT Hamiltonian is turned off and the two-photon dissipation is turned back on again - this is resuming operation 820. At no point in time does the ATS serve two purposes at once. The limitations for the CNOT pulse strength and shape (dotted or dashed lines) will now be explained.

The CNOT Hamiltonian effectively acts as a linear drive on the control qubit q which strength depends on the number of photons in the target cat qubit a. The nature of the control qubit q sets upper bounds on the maximal effective drive strength $g_{CNOT}\alpha$. There exist two main cases (hereinafter the first and second cases). In the *first* case, the control qubit q is defined by a real or Hamiltonian gap - for a two-level system this gap is the anharmonicity $\omega_{12} - \omega_q$ V where $\omega_q$ is the qubit frequency or the frequency of ground to first excited state transition and $\omega_{12}$ is the frequency of first excited to second excited state transition (this may for instance be a transmon). In that case, the adiabatic theorem applies and states that the qubit stays exponentially confined despite the action of the effective drive provided $g_{CNOT}\alpha < |\omega_{12} - \omega_q|$. If the ancilla qubit is a cat qubit with amplitude $\alpha_c$ confined by a Kerr Hamiltonian the condition writes $g_{CNOT}\alpha < K\alpha_c^2$. If it is confined by a detuned Kerr Hamiltonian the condition writes $g_{CNOT}\alpha < K(\alpha_c^2 + \sqrt{\Delta})$. Finally, it is confined by a TPE Hamiltonian, the condition writes $g_{CNOT}\alpha < \alpha_c g_2$. In the *second* case, the control qubit q is defined by an imaginary gap or equivalently is stabilized by dissipation. In that case, the adiabatic theorem does not apply and the gate strength has to be much smaller than the imaginary gap in order to avoid undesired decoherence of the ancilla qubit during the gate. In practice, for an ancilla cat qubit stabilized by two-photon dissipation with rate $\kappa_2$ the condition writes $g_{CNOT}\alpha \ll \kappa_2\alpha_c^2$. For a squeezed ancilla cat qubit (namely, realized with the aforementioned dissipative squeezing stabilization), the condition writes $g_{CNOT}\alpha \ll \kappa_2\alpha_c^2 e^{2r}$ where r is the squeezing parameter, and a similar condition may be derived for the variant of the dissipative squeezing stabilization scheme described in European patent application EP 23175147.0.

On top of the gate strength requirement, the nature of the control qubit confinement sets constraints on how the gate should be applied. In the case of a dissipative ancilla qubit, the CNOT Hamiltonian can be turned on instantaneously as shown by the dashed lines of the figure 5 as soon as the data cat qubit confinement is turned off (solid line $\kappa_2(t)$). In the case of a Hamiltonian ancilla qubit, the CNOT Hamiltonian may be turned on smoothly such that the spectral content of the pulse $g_{CNOT}(t)$ (dotted lines) does not contain frequency components above the gap. Typically, a gaussian pulse can be used. On the above figure, a cosine shape is used for its finite temporal envelope. In the case of a time dependent $g_{CNOT}$, the pulse amplitude should be such that $\int 4\alpha g_{CNOT}(t)dt = \pi$.

[Fig. 6] n example circuit coupling four dissipatively stabilized cat qubits is shown schematically on figure 6: (i.e., each of the four cat qubits is parametrically stabilized by an ATS, although other four wave-mixing nonlinear elements may be used instead of the ATS, such as a parametrically pumped Josephson Junction or a DC-biased Josephson Junction).

In this non-limiting exemplary implementation four dissipative cat qubits 1101, 1102, 1103 and 1104 with similar parameters (except for their frequencies which are slightly detuned from one another in order to selectively address each mode with the radiation and not having the modes delocalized over the entire circuit) are laid on a superconducting chip in circular pattern with nearest neighbor connection.

This is a partial schematic version of the practical implementation. In this schematic, the choice has been made to make 1101 and 1103 the two data cat qubits and 1102 or 1104 the ancilla cat qubit for readability, hence the labels "a" and "q". Both the data and the ancilla cat qubits are dissipative cat qubits. The circuit representation is similar to figure 5 (except for the control qubit) with a capacitive bus coupling 304 between the data 1101 and the ancilla 1102 qubit modes. The microwave radiation sources are not represented but CPW (co-planar waveguide) transmission lines that connect the circuit to the outside rest of the quantum system are represented and labelled 1120, 1122, 1124. The lines 1120, 1122 are responsible for the DC current bias and the parametric flux modulation of the ATS 308, the first one addressing mostly the right loop and the second one addressing mostly le left loop. By pumping any linear combination of both, the control circuit can pump $\varphi_\Sigma$ or $\varphi_\Delta$. The line 1124 connects the buffer to a 50$\Omega$ environment to enable losses and drive. The ancilla qubit 1102 has the same input transmission lines as the data qubit 1101.

The Hamiltonian enabling the gate, in the form of a longitudinal coupling between the control qubit and the target qubit, can be written as $H_{CNOT}/\hbar = g_{CNOT}(q + q^\dagger)(a^\dagger a - \alpha^2)$ where $g_{CNOT}$ is the CNOT interaction strength, q and a are ladder operators for the control and for the target qubits, respectively.

In summary, as can be seen in this Hamiltonian (and described above), the rotation of the target qubit in the complex plane occurs at a rate proportional to $g_{CNOT}$. Calling $T_{CNOT}$ the CNOT gate time, at the end of which the target qubit rotated as wanted, this parameter of the gate is therefore of the form, with k a real number $T_{CNOT} = k / g_{CNOT}$. This Hamiltonian is approximately activated (as described above) with a microwave drive sent to the ATS of the target qubit at the frequency of the memory of the control. Starting from stabilised control and target qubits, the stabilisation of the target qubit is turned off to allow for conditional rotation of the target qubit. On the contrary, the stabilisation of the control qubit is kept on (in the case of the control being a cat qubit). The conditional rotation of the target qubit is then activated by a microwave drive sent to the ATS of the target qubit at the frequency of the memory of the control qubit. This drive is kept active during the duration $T_{CNOT}$. Once the desired conditional rotation is complete (ie after the $T_{CNOT}$ duration), the stabilisation on the target qubit is turned back on at the same time the CNOT pulse, ie the drive on the ATS of the target qubit, is turned off.

As mentioned above, the memory resonator of the target cat qubit and the control qubit (in the form of a discrete-level qubit such as a transmon) can be designed so as to be $\chi$-matched and further be coupled via a magnetic-flux-tunable coupler. In this alternative embodiment, the CNOT gate may be performed by: (i) turning off the stabilization on the target cat qubit; and simultaneously (ii) sending a CNOT pulse to the magnetic-flux-tunable coupler to turn on the $\chi$-matched dispersive interaction for a period time long enough to perform the desired conditional rotation of the target cat qubit. As will be appreciated, the magnetic-flux-tunable coupler mediates the dispersive coupling between the memory of the target cat qubit and the control qubit, such that at a first working point the $\chi$-matched dispersive interaction is "off", and at another working point, attained via application of the CNOT flux pulse to the tunable coupler, the $\chi$-matched dispersive interaction is "on". Herein, such a dynamical interaction is referred to as the "dispersive interaction CNOT".

Deformation of resonator under free flight

[Fig.7] Figure 7 shows two factors of deformation of a cat qubit: dephasing, on the left of the figure, and self-Kerr effect on the right of the figure. The upper plots show the evolution of an originally focused blob during a free-flight evolution, the stabilization being turned off. The lower plots show the effect of the resuming of the stabilization from the configuration of the corresponding upper plots: the blobs are refocused, but there is some leakage of intensity and thus some bit-flips.

As mentioned above, the Kerr effect is a widely known phenomenon in nonlinear quantum optics. The self-Kerr deformation (experienced by the target qubit during the operation of a CNOT gate) is well characterized by the $K_4$ and $K_6$

terms which are got into herebelow. The dephasing is well characterized by the $K_\phi$ term.

**The deformation of a resonator in free flight under a dynamical interaction is characterized.**

Experimental imperfections of the Asymmetrically Threaded Squid (ATS), such as the imbalance between the energy of the two Josephson junctions, or the activation of spurious terms while activating the longitudinal interaction, lead to non-linear evolutions. The strongest effects are self-Kerr effect of order 4 and of strength $K_4$ and dephasing of rate $K_\Phi$ and they have the following operators:

- n order Kerr evolution Hamiltonian: $H_{Kerr}^{(n)} = -\frac{K_{(n)}}{\left(\frac{n}{2}\right)!}(a^\dagger)^{\frac{n}{2}} a^{\frac{n}{2}}$ with n=4 for the larger term

- Lindbladian jump operator of dephasing: $L_\phi = \sqrt{\kappa_\phi}\, a^\dagger a$

[Fig. 8] step of acquiring data is first performed. The deformation of the resonator (i.e. the memory mode of the target cat qubit) in free flight is characterized while the cat qubit experiences a dynamical interaction.

The data acquisition comprises performing the following measurement loop:

- Prepare the resonator in a coherent state (with n photons) or a superposition of coherent states -this means preparing the target qubit into state $|\alpha\rangle$ or $|-\alpha\rangle$, or into a superposition of these two states
- Wait for a time t, wherein one or multiple dynamical interactions are activated during the waiting time t
- Proceed to a Wigner or a Husimi tomography of the resonator - any quantum tomography (ie a process which gives us the density matrix of the system) would work, and Husimi-Q at sufficiently high n value is used in an embodiment.

The pulse sequence, shown in a general manner on figure 8, includes a first phase 80 of preparing a coherent state, then a second phase, shortly after the end of the first phase 82, of waiting for a duration $t_i$ (with the dynamical interaction being played) and eventually a third phase 84, shortly after the end of the second phase, of performing a quantum tomography of the resonator.

Repeating this measurement for different times $t_i$, with otherwise unchanged interaction parameters, captures the free flight evolution of the resonator, allowing later to recover the strength of the different effects at stake through a data analysis process.

A further option may include performing the same process several times, but with different average number of photons of the coherent state (so different values of $\alpha$ which is the amplitude of coherent state $|\alpha\rangle$ and related to the average photon number in the resonator as described above) and/or different values of the dynamical interaction parameter(s), in particular the dynamical interaction strength. This allows eventually, at the step of analyzing the data, to better decouple the different phenomena, giving more accuracy to the estimations of the intensity of the effects.

The dynamical interaction may be the CNOT interaction (as described above, and in more detail in prior art EP4428767A1 and EP4428765A1, namely the "ATS-pumped CNOT"), between a control qubit and a target cat qubit, and in that case the resonator being characterized is the memory mode of the target cat qubit. Another dynamical interaction may be the "dispersive interaction CNOT" in the form of the $\chi$-matched dispersive interaction between a control qubit and a target cat qubit (as described above and in more detail in Putterman, Harald, et al. "Hardware-efficient quantum error correction using concatenated bosonic qubits." *arXiv preprint arXiv:2409.13025* (2024)), wherein the strength of the interaction may be the length of time the tunable coupler places the target cat qubit and the ancilla qubit in the dispersive coupling regime and/or the parameters categorizing the dispersive coupling strength (e.g. dependent on the external flux of the tunable coupler).

[Fig. 9] Figure 9 shows the pulse sequence in the ATS-pumped CNOT embodiment. The first line relates to the ancilla qubit and the second line to the data qubit.

Thus the dynamical interaction is applying the CNOT interaction ie a microwave drive on the ATS of the target (data) cat qubit at the resonant frequency of the control (ancilla) qubit, for a time $t_i$ and at a pulse strength which is time integral of pulse amplitude. During the application of the pulse, the target cat qubit is not subject to stabilization, i.e. it is in free flight (see figure 1).

A step of analyzing the data is then performed.

The acquired data is then compared with simulations to extract the parameters of the deformation in a data analysis phase.

The experimental data is reproduced by simulation considering the following physical parameters of the target cat qubit: detuning $\Delta$, relaxation rate $K_1$, dephasing $K_\phi$, self-Kerr of order 4 $K_4$, self-Kerr of order 6 $K_6$. Detuning $\Delta$ contains the cross-Kerr effect with the buffer, other coupling occurring with other neighbouring quantum systems close to the memory, the dynamical AC Stark shift (when the additional tone is applied), dynamical cross-Kerr (when an additional tone is applied).

In an embodiment, for a fixed value of the dynamical interaction parameters, simulations are performed to simulate how the target cat qubit should evolve over the given time period $t_i$. In an exemplary way, the simulations are performed in a systematic manner for different values of the above physical parameters of the target cat qubit ($\Delta$, $K_1$, $K_\phi$, s $K_4$, $K_6$).. The simulations are then compared with the appropriate quantum tomography from the data acquisition phase (i.e. the results for the given fixed value of the dynamical interactions and time period $t_i$), and the simulation which best matches the data is looked for and identified. The physical parameters of this "best match" simulation are identified and thus give the physical parameters which best characterize the target cat qubit in free flight under that specific engineered dynamical interaction. Determining the best match simulation is done in an embodiment with least squares fit and other known data analysis method are used in alternative embodiments.

In an embodiment, the evolution of the target cat qubit is simulated numerically by diagonalizing the Liouvillian describing the system (the Liouvillian is the master equation of the system), which leads to fast simulations. Another method is to solve numerically the Ordinary Differential Equations (ODE) describing the system, for example using Euler's method. But in certain embodiments the ODE can also be analytically solved, and it is in these circumstances preferred to diagonalize the Liouvillian since it is feasible.

This allows to explore the parameter space with standard optimization functions and to fit the data.

In the case of the CNOT interaction for the ATS-pumped CNOT embodiment between a control qubit and a target cat qubit, the ancilla (control) qubit state is restrained to a coherent state to simplify the data analysis. Indeed, the CNOT interaction detunes the data qubit resonator depending on the state of the ancilla qubit. In the case of the superposition of states in the ancilla, the data qubit resonator thus experiences several detunings at the same time. Under the conditions that (1) the preparation of a coherent state in one of the coherent states of the ancilla qubit has a high fidelity - meaning that no population is present in the other coherent state- and that (2) the bitflip time of the ancilla qubit is much greater (at least one order of magnitude greater) than the interaction times used in the measurement it can be approximated that the ancilla qubit remains either in $|+\alpha\rangle$ or $|-\alpha\rangle$ for the entire measurement duration, and this reduces the CNOT interaction to a single detuning. This allows assimilating the evolution of the data qubit to a free evolution - meaning without any on-going interaction. Therefore, if a coherent state is prepared in the data qubit resonator, the exact same regime exists as the one of the deformation measurement, and the analysis can be realized in the same way. This leads to faster simulations.

The process thus runs as follows:

- First, calibrate the system, including the CNOT gate, and the target and control qubits. Then for several values of $t_i$, prepare the control qubit in the state $|0\rangle$ or $|1\rangle$ - this has to be a coherent state, so $|\alpha\rangle_C$ or $|-\alpha\rangle_C$ - the process can also be performed in any superposition of coherent states (although a coherent state on the control qubit is likely to give a good signal to noise ratio for the fit in particular if the target also starts in a coherent state). Then prepare the target qubit in any coherent state of n photons (the phase matters less): $e^{i\phi_T}|\alpha\rangle_T$ with any value of $\phi_T$. Then play the CNOT interaction during the time $t_i$. This means that the CNOT interaction is played with a fixed CNOT interaction strength $g_{CNOT}$ with a duration $t_i$. The CNOT interaction is as described above: a microwave drive applied on the target cat qubit's non-linear element at the frequency of the control qubit.
- Then, a Wigner tomography of the target qubit is performed, and eventually, the system is reset.
- The duration $t_i$ is iterated, with the whole process being performed with the new value of $t_i$.

In the case of the CNOT interaction for the dispersive interaction CNOT embodiment between a control qubit and a target cat qubit, the ancilla (control) qubit state is instead restrained to one of the ground or lower excited states $|g\rangle$, $|e\rangle$, or $|f\rangle$. The process then runs as described in the previous paragraph, with the exception of the CNOT interaction being as described above in relation to the dispersive interaction CNOT embodiment, namely applying a flux pulse on the tunable coupled to place the memory and the ancilla in the $\chi$-matched dispersive regime (keeping the dispersive coupling strength fixed, and sweeping only the duration $t_i$.

In an embodiment, this process (for either the ATS-pumped CNOT or the dispersive interaction CNOT embodiments) is performed for different numbers n of photons in the target cat qubit (i.e. different sizes of $|\alpha\rangle_T$). As $K_4$ scales as $(a^\dagger)^2 a^2$ and $K_6$ scales as $(a^\dagger)^3 a^3$, these terms scale differently with target cat size, such that performing the measurements with different cat sizes enables to better distinguish between the two corresponding terms in the simulations.

In an embodiment, the process is also performed for different CNOT interaction strengths $g_{CNOT}$ (or dispersive coupling strengths). The effect of using different $g_{CNOT}$ values (or dispersive coupling strengths) is to have the scaling of $K_4$, $K_6$ or $K_\phi$ vs $g_{CNOT}$ (or dispersive coupling strengths). This is valuable information since before optimizing anything (any parameter of the CNOT gate) the final CNOT pulse amplitude (or amplitude of the flux pulse on the tunable coupler) that will be used is not known. So how $K_4$ $K_6$ and $K_\phi$ scale versus $g_{CNOT}$ (or dispersive coupling strengths is information useful later for the calibration of the gate.

Eventually the experimental data is fitted with the simulations, to thereby extract numerical values of the physical parameters.

The above described process was described with the CNOT dynamical interactions, but can be used for another dynamical interaction. Other dynamical interactions could include specific microwave tones applied off-resonantly to modes coupled to the memory or to the memory itself, for instance to perform different quantum gates on the stabilized cat qubit, and in particular when the cat stabilization is turned off during the duration of the dynamical interaction. Such dynamical interactions could include drive-induced nonlinearities of the cat memory mode coupled to a transmon ancilla or a dispersive interaction with a sideband drive.

The above method allows the physical parameters of the target cat qubit for a given dynamical interaction being extracted successfully.

A detailed example is now presented.

[Fig. 10] Figure 10 shows an embodiment in which the deformation of a target memory resonator is characterised whilst under the influence of a specific CNOT interaction strength $g_{CNOT}$ as described above.

The resonator of the target cat qubit is prepared in a coherent state with $\alpha = \sqrt{5}$ (coherent state with an average number of 5 photons). The memory resonator of the control cat qubit is prepared with $\alpha = -\sqrt{4,9}$ (coherent state with an average number of 4,9 photons in $| - \alpha \rangle$). The interaction strength is $g_{CNOT}$ = 190 kHz.

A CNOT pulse at a given amplitude for varying durations is played. This duration is for example, as shown on figure 9, from 20 ns (upper rows, first column) to 2,15 $\mu$s (lower rows, fourth column).

The interaction is kept on for much more than the time required achieving a full $\pi$ rotation, for example 10 times more.

The Wigner tomography of the data qubit (under the CNOT interaction) is measured and shown at increasing interaction time. Each of the 28 plots is a quantum tomography and thus a plot in the complex plane, with the real part on the horizontal axis and the imaginary part on the vertical axis.

The first, third and fifth rows show experimental data, whereas the second, fourth and sixth row show results of simulations with an interaction duration equal to that of the experiment shown immediately above.

When a prepared state in a resonator is allowed to freely evolve in the absence of stabilization, it is reckoned that the state deforms due to the Kerr Hamiltonian $H_{Kerr}^{(n)} = -\frac{K_{(n)}}{\left(\frac{n}{2}\right)!}(a^\dagger)^{\frac{n}{2}}a^{\frac{n}{2}}$, including Kerr 4 $K_4$, Kerr 6 $K_6$ terms and due to other terms such as detuning $\Delta$, relaxation rate $K_1$, dephasing $K_\phi$, The resulting Hamiltonian is used to simulate the evolution of a prepared state in the memory resonator over a time period. The state can be a coherent state, or a superposition thereof (i.e. a cat state).

The simulation in itself is standard, and made with the QuTiP software.

The simulation is adapted to account for the expected evolution arising from the dynamical interaction, in this case the dynamical interaction required for the ATS-pumped CNOT gate described in detail above.

Figure 10 shows the experimental data and corresponding simulations for 14 different times, from 20 ns to 2,15 $\mu$s as already mentioned : 5 durations between 20 ns and 100 ns, 5 durations between 0,10 and 0,80 ns, and 4 durations between 0,8 and 2,6 $\mu$s.

Each simulation panel shows the best-fit simulated reproduction of the experimental data of the panel immediately above it: the parameters of the simulation are optimized so as to best match the experimental data.

[Fig. 11] Figure 11 shows the absolute value of the expectation value of the annihilation operator â as a function of time as shown in figure 9, on the basis of the data shown on figure 10. Thus 14 points are presented, from 0,02 $\mu$s to 2,15 $\mu$s, the duration being presented on the horizontal axis. The values on the vertical axes are calculated from the integration of the Wigner tomography experimentally acquired. A fit is also shown.

[Fig. 12] Figure 12 shows the expectation value of the operator 'number of photons' $\langle a^\dagger a + 1/2 \rangle$. What is plotted is the integral of the Wigner, which leads to $\langle a^\dagger a + 1/2 \rangle$. The $\langle a^\dagger a \rangle$ term is indeed the number of photons, but there is 1/2 photon of noise, which is what you get when integrating the Wigner of the vacuum.

Again 14 points are presented, from 0,02 $\mu$s to 2,15 $\mu$s. The values on the vertical axes are calculated from the integration of the Wigner tomography experimentally acquired. A fit is also shown.

The fits based on the plots of figures 10 and 11 give the following values for the deformation parameters

Dephasing time $T_\phi$= 5,483 $\mu$s
Relaxation time $T_1$ = 4,147 $\mu$s
Fourth order of self-Kerr $K_4/2\pi$ = 0,131 MHz
Detuning of the mode : $\Delta$ = 2,681 MHz

[Fig. 13] Figure 13 shows the same measurement performed with a different set of CNOT parameters, leading to stronger deformation. It shows the robustness of this acquisition method. Again the durations are chosen from 20 ns to 2150 ns. The resonator of the target cat qubit is again prepared with $\alpha = \sqrt{5}$ (coherent state with an average number of 5 photons). The memory resonator of the control cat qubit is also again prepared with $\alpha = -\sqrt{4,9}$ (coherent state with an average number of 4,9 photons in $|-\alpha\rangle$). But the interaction strength is $g_{CNOT}$ = 397 kHz.

[Fig. 14] Figure 14 shows the absolute value of the expectation value of the annihilation operator â in the same manner as figure 11, but with the values obtained on figure 13.

[Fig. 15] Figure 15 shows the expectation value of the operator 'number of photons' $\langle a^\dagger a + 1/2\rangle$ in the same manner as figure 12, but with the values obtained on figure 13.

The simulation still captures the dynamic and fitting the experimental measurements brings the following parameters:

Dephasing time: $T_\phi$= 1,783 µs
Relaxation time: $T_1$ = 4,762 µs
Fourth order of self-Kerr: $K_4/2\pi$ = 0,303 MHz
Detuning of the mode: $\Delta$ = 1,642 MHz

This method thus enables the deformation parameters under a CNOT interaction for given values of $g_{CNOT}$, size of (number of photons in) target qubit, and size of (number of photons in) control qubit to be extracted. As will be appreciated other parameters can be readily extracted for embodiments applying a different dynamical interaction, e.g. such as that described above in relation to the dispersive interaction CNOT.

Further, the size of the target qubit (or target coherent state size) can also be varied, which in particular helps distinguish between the Kerr4 and Kerr6 contributions because these interactions don't act the same with different photon numbers (Kerr4 is linear with the number of photons and Kerr6 is quadratic with the number of photons). In the examples given above, the size of the target qubit was 5, but it is advantageous to proceed to measurements with other values, such as 3, 4, 5, to 8 or 10, for example.

In embodiments, the present inventors have recognized that preparing the target qubit and control qubit each in a coherent state (as described), rather than in a cat state, is advantageous because the data qubit resonator experiences only one detuning, and this allows having less signal to noise ratio.

However, one or both of the target and control may be prepared as a cat state. In this case, the simulations are correspondingly modified.

The physical quantity that influences significantly the scaling of self-Kerr induced by the CNOT dynamical interaction is the strength of the interaction $g_{cnot}$. The time length of the interaction $T_{CNOT}$ has less effect by itself.

**Claims**

1.   A method of characterizing a quantum device, comprising a step of observing by quantum tomography (84) evolutions of an oscillator of the quantum device initially prepared (80) with at least one coherent state and being subsequently subjected (82) to a dynamical interaction, and a subsequent step of using tomographies obtained during the step of observing to characterize a non-linear effect experienced by the oscillator upon performance of the dynamical interaction.

2.   A method of characterizing a quantum device according to claim 1, wherein the step of observing includes varying a number of photons of the prepared oscillator.

3.   A method of characterizing a quantum device according to claim 1 or claim 2, wherein the step of observing includes varying an interaction strength of the dynamical interaction.

4.   A method of characterizing a quantum device according to any of claims 1 to 3, wherein the oscillator is a memory of a data qubit and the dynamical interaction is an interaction with an ancilla qubit.

5.   A method of characterizing a quantum device according to claim 4, wherein the dynamical interaction is a microwave drive for a CNOT gate, said oscillator being a memory of a target qubit of said gate.

6.   A method of characterizing a quantum device according to any of claims 1 to 5, wherein the quantum device uses a cat code, a stabilization used for a cat state of the oscillator being turned off for the dynamical interaction being applied to said oscillator.

7.   A method of characterizing a quantum device according to any of claims 1 to 6, wherein the step of observing is performed through a Wigner tomography or a Husimi-Q tomography of the oscillator.

8.  A method of characterizing a quantum device according to any of claims 1 to 7, wherein said step of using tomographies includes performing analysis to account for distinct non-linear effects for the oscillator including self-Kerr and dephasing.

9.  A method of characterizing a quantum device according to any of claims 1 to 8, wherein said step of using tomographies includes performing analysis to estimate a fourth order self-Kerr magnitude and a sixth order self-Kerr magnitude.

10.  A method of characterizing a quantum device according to any of claims 1 to 9, wherein said step of using evolutions includes comparing observations obtained by quantum tomography upon the step of observing with simulations made numerically by diagonalizing a Liouvillian describing the quantum device or by solving numerically an Ordinary Differential Equations describing the quantum device.

11.  A method of characterizing a quantum device according to any of claims 1 to 10, wherein the step of observing evolutions is performed upon a range of two orders of magnitude of time.

12.  A method of characterizing a quantum device according to any of claims 1 to 11, wherein said step of observing includes obtaining observations by performing several independent sequences, the dynamical interaction being performed upon each of the sequences on a identically initially prepared oscillator and with a duration specific to the sequence and then interrupted at the end of the duration, a tomography being then performed in each sequence to capture the state of the oscillator at the moment of the interruption.

13.  A method of characterizing a quantum device according to any of claims 1 to 12, wherein the oscillator is prepared with a single coherent state.

14.  A computing system comprising a quantum device having an oscillator operated in a quantum state and an interaction setup to apply a dynamical interaction to said oscillator, the computing system also comprising a quantum tomography setup observing said oscillator, the computing system further comprising a processing routine to characterize the quantum device through initial preparation of the oscillator in one coherent state or several superposed coherent states, subsequent performing of the dynamical interaction with observation of an evolution of the oscillator by the quantum tomography setup during said performing the dynamical interaction, and a subsequent characterization of a nonlinear effect experienced by the oscillator upon performance of the dynamical interaction based on recorded tomographies.

15.  A computing system according to claim 14, further comprising a controller varying an implementation parameter of the dynamical interaction such as the interaction strength of the dynamical interaction or a number of photons in the oscillator.

Fig. 1

Fig. 2

Fig. 3

Fig. 4

Fig. 5

Fig. 6

Fig. 7

80　　　　　　　82　　　　　　　84

| Prepare a coherent state | Wait for t[i] | Tomography |

Fig. 8

During a time t

| Ancilla | Prepare $\vert \pm \alpha \rangle$ | Ancilla Stabilization + Cnot Pulse | Tomography |
| Data | Prepare $\vert \pm \alpha \rangle$ | | Tomography |

Fig. 9

Fig. 10

Fig. 11

Fig. 12

Fig. 13

Fig. 14

Fig. 15

Europäisches
Patentamt
European
Patent Office
Office européen
des brevets

# EUROPEAN SEARCH REPORT

**Application Number**

EP 24 30 6771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | GERHARD KIRCHMAIR ET AL: "Observation of quantum state collapse and revival due to the single-photon Kerr effect (+Supplementary Information)", NATURE, vol. 495, no. 7440, 1 March 2013 (2013-03-01), pages 205-209, XP055509819, DOI: 10.1038/nature11902 | 1 | INV. G06N10/40 G06N10/70 |
| Y | * the whole document * | 1-15 | |
| Y,D | EP 4 428 767 A1 (ALICE & BOB [FR]) 11 September 2024 (2024-09-11) * paragraphs [0033], [0038], [0068] - [0073], [0085] * | 1-15 | |
| A | HARALD PUTTERMAN ET AL: "Preserving phase coherence and linearity in cat qubits with exponential bit-flip suppression", ARXIV.ORG, CORNELL UNIVERSITY LIBRARY, 201 OLIN LIBRARY CORNELL UNIVERSITY ITHACA, NY 14853, 26 September 2024 (2024-09-26), XP091890824, * first paragraph of the appendix V * | 8 | |
| A | ANDREI GAIDASH ET AL: "Algebraic approach for investigation of a multi-mode quantum system dynamics", ARXIV.ORG, CORNELL UNIVERSITY LIBRARY, 201 OLIN LIBRARY CORNELL UNIVERSITY ITHACA, NY 14853, 4 July 2022 (2022-07-04), XP091262767, * abstract * | 10 | |

**TECHNICAL FIELDS SEARCHED (IPC)**

G06N

The present search report has been drawn up for all claims

| Place of search | Date of completion of the search | Examiner |
|---|---|---|
| The Hague | 7 April 2025 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 30 6771

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2025

| Patent document cited in search report | Publication date | Patent family member(s) | Publication date |
|---|---|---|---|
| EP 4428767 A1 | 11-09-2024 | EP 4428767 A1<br>WO 2024184406 A1 | 11-09-2024<br>12-09-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 4428767 A1
- EP 4428765 A1
- EP 24305336
- EP 24305337
- EP 23306839
- EP 23175147
- EP 4383139 A1
- EP 4383140 A1

### Non-patent literature cited in the description

- **LESCANNE et al.** Exponential suppression of bit-flips in a qubit encoded in an oscillator. *Nature Physics*, 2020, vol. 16, 509-513
- **LESCANNE et al.** *Nature Physics*, 2020, vol. 16, 509-513
- **BERDOU et al.** PRX Quantum 4, 020350, 2022 also discloses flux maps. *Reglade, Nature*, 2024, vol. 629, 778-783
- **PUTTERMAN, HARALD et al.** Hardware-efficient quantum error correction using concatenated bosonic qubits. *arXiv preprint arXiv:2409.13025*, 2024
- **P. CAMPAGNE-LBARCQ et al.** Quantum error correction of a qubit encoded in grid states of an oscillator. *Nature*, 2020, vol. 584, 368-372
- **LEGHTAS et al.** *Science*, vol. 347, 853-857
- **KIRCHMAIR et al.** Observation of quantum state collapse and revival due to the single-photon Kerr effect. *Nature*, 2013, vol. 495 (7440), 205-209
- **ESSIG et al.** *Phys. Rev. X*, vol. 11, 031045
- **HEERES et al.** Cavity State Manipulation Using Photon-Number Selective Phase Gates. *Phys. Rev. Lett.*, vol. 115, 137002
- **RÉGLADE, U. ; BOCQUET, A. ; GAUTIER, R. ; COHEN, J. ; MARQUET, A. ; ALBERTINALE, E. ; PANKRATOVA, N. ; HALLÉN, M. ; RAUTSCHKE, F. ; SELLEM, L.A.** Quantum control of a cat qubit with bit-flip times exceeding ten seconds. *Nature*, 2024, vol. 629, 778-783